# EUROPÄISCHE PATENTANMELDUNG

(11) **EP 2 688 053 A1**
(43) Veröffentlichungstag der Anmeldung: **22.01.2014**
(21) Anmeldenummer: 12176706.5
(22) Anmeldetag: 17.07.2012
(51) Int. Cl.: G08C 17/02

(54) **Verfahren zur Anmeldung eines mobilen Bediengerätes an einen Wirkbereich einer zu bedienenden Maschine und Antwortgebersystem**

(71) Anmelder: Siemens Aktiengesellschaft, 80333 München (DE)
(72) Erfinder: Brünn, Patrick, 13583 Berlin (DE)

(57) **Zusammenfassung**

Um die Sicherheit bei der Bedienung einer Maschine (4) mit einem mobilen Bediengerät (2) zu erhöhen, wird vorgeschlagen ein Antwortgebersystem (1) umfassend einen ersten Transponder (11) mit einer ersten Identifikationsnummer (21), einen zweiten Transponder (12) mit einer zweiten Identifikationsnummer (22) und mit einem Verfahren zur Anmeldung eines mobilen Bediengeräts (2) an einen Wirkbereich (3) einer zu bedienenden Maschine (4), wobei das mobile Bediengerät (2) an ein Antwortgebersystem (1) angenähert wird, wobei das Antwortgebersystem (1) einem Wirkbereich (3) zugeordnet ist und über ein das mobile Bediengerät (2) umfassendes Lesegerät (5) eine erste Identifikationsnummer (21) aus einem ersten Transponder (11) des Antwortgebersystems (1) ausgelesen wird, wobei über das Lesegerät von einem in dem Antwortgebersystems (1) angeordneten zweiten Transponder (12) eine zweite Identifikationsnummer (22) ausgelesen wird, wobei in dem Lesegerät (5) geprüft wird, ob die erste und die zweite Identifikationsnummer (21,22) aus dem Antwortgebersystem (1) stammen und bei einem positiven Prüfergebnis das Bediengerät (2) zum Bedienen der Maschine (4) in dem Wirkbereich (3) freigeschaltet wird, zu nutzen.

## Beschreibung

Die Erfindung betrifft ein Antwortgebersystem umfassend einen Transponder mit einer ersten Identifikationsnummer. Das Antwortgebersystem mit dem ersten Transponder wird dazu genutzt in einem Verfahren zur Anmeldung eines mobilen Bediengerätes an einen Wirkbereich einer zu bedienenden Maschine, wobei das mobile Bediengerät an das Antwortgebersystem angenähert wird, und das Antwortgebersystem einen Wirkbereich zugeordnet ist, über ein das mobile Bediengerät umfassendes Lesegerät die erste Identifikationsnummer aus dem ersten Transponder des Antwortgebersystems auszulesen.

Bei der Bedienung von Maschinen/Anlagen über ein mobiles Bediengerät können in einem bestimmten Umfeld der Maschinen/Anlagen gefahrbringende Aktionen der Maschinen/Anlagen für den Nutzer des mobilen Bediengerätes entstehen. Es ist daher nicht zulässig, gefahrbringende Aktionen an Maschinen/Anlagen in einem sicherheitsrelevanten Umfeld von einem beliebigen Ort aus durchzuführen.

Die europäische Patentschrift EP 2 020 625 A1 beschreibt ein Verfahren zur Anwendung eines mobilen Bediengerätes, mit dem eine Maschine innerhalb eines zugeordneten Wirkbereiches bedienbar ist. Um bei diesem Verfahren eine Anmeldung an einem "falschen" Wirkbereich zu erschweren oder zu verhindern, wird als eine zusätzliche Sicherheitsmaßnahme gefordert, dass nach einem elektronischen Auslesen einer Identifikationsnummer des dem Wirkbereich zugeordnetem Antwortgebersystems, der Benutzer des mobilen Bediengerätes eine in der Anlage fest montierte zugehörige Wirkbereichsidentifikationsnummer über das mobile Bediengerät manuell eingibt. Diese Eingabe wird in einem Sicherheitsmodul mit den momentan über den elektronischen Weg ermittelten Daten geprüft. Stimmen beide Eingaben überein, so wird eine Bedienung über das mobile Bediengerät freigeschaltet.

Es ist Aufgabe der vorliegenden Erfindung ein Antwortgebersystem bzw. ein Verfahren zur Anmeldung eines mobilen Bediengerätes an einen Wirkbereich einer zu bedienenden Maschine bereitzustellen, bei welchem ein Bediener auf eine zusätzliche Eingabe einer Identifikationsnummer verzichten kann und trotzdem die notwendige Sicherheit gewährleistet ist.

Die Aufgabe wird durch ein Antwortgebersystem umfassend einen ersten Transponder mit einer ersten Identifikationsnummer und einen zweiten Transponder mit einer zweiten Identifikationsnummer gelöst. Ein RFID-Tag ist beispielsweise ein Transponder. Mit dem Antwortgebersystem mit einem ersten Transponder und einem zweiten Transponder, also beispielsweise einem ersten RFID-Tag und einem einen zweiten RFID-Tag, lässt sich ein Anmeldevorgang eines mobilen Bediengerätes derart vereinfachen, dass der Bediener keine manuelle Eingabe über sein mobiles Bediengerät für den Anmeldevorgang mehr tätigen muss. Ein Antwortgebersystem mit einem ersten RFID-Tag und einen zweiten RFID-Tag stellt eine fehlersichere RFID-Einheit dar. Diese fehlersichere RFID-Einheit kann beispielsweise als eine zusammengehörige Einheit, wie beispielsweise eine RFID-Scheckkarte mit zwei integrierten RFID-Tags, ausgestaltet sein oder als zwei getrennte RFID-Tags, die logisch als ein fehlersicheres System gekoppelt werden.

Im Zusammenspiel mit einem Verfahren zur Anmeldung eines mobilen Bediengerätes an einen Wirkbereich einer zu bedienenden Maschine, wobei das mobile Bediengerät an ein Antwortgebersystem angenähert wird, wobei das Antwortgebersystem einen Wirkbereich zugeordnet ist und über ein das mobile Bediengerät umfassendes Lesegerät eine erste Identifikationsnummer aus einem ersten Transponder des Antwortgebersystems ausgelesen wird, wird die eingangs genannte Aufgabe dadurch gelöst, dass über das Lesegerät von einem in dem Antwortgebersystem angeordneten zweiten Transponder eine zweite Identifikationsnummer ausgelesen wird, wobei in dem Lesegerät geprüft wird, ob die erste und die zweite Identifikationsnummer aus dem Antwortgebersystem stammen und bei einem positiven Prüfergebnis das Bediengerät zum Bedienen der Maschine in dem Wirkbereich frei geschaltet wird.

In einer Weiterbildung des Verfahrens wird eine Wirkbereichsliste projektiert, in der die Identifikationsnummer des Antwortgebersystems dem Wirkbereich zugeordnet ist, und in dem mobilen Bediengerät hinterlegt. Bei mehreren Wirkbereichen und um den Anforderungen der Sicherheitstechnik gerecht zu werden, müssen Bereiche technisch definiert werden, und es muss eine eindeutige Zuordnung zu diesen Bereichen stattfinden. Dementsprechend sind für die Bedienung einer Anlage/Maschine unterschiedliche Wirkbereiche definiert, die beispielsweise von mehreren unterschiedlichen Antwortgebersystemen aufgespannt werden.

Ein auf die Sicherheit bezogenes Anmelden des mobilen Bediengerätes über das Antwortgebersystem an den jeweiligen Wirkbereich wird weiter verbessert, wenn bei der Projektierung auf die zweite Identifikationsnummer unter Zuhilfenahme der ersten Identifikationsnummer eine Funktion angewendet wird, welche die zweite Identifikationsnummer derart verändert, dass ein Wertepaar von zwei Identifikationsnummern vorliegt, wobei der erste Wert der unveränderten ersten Identifikationsnummer entspricht und der zweite Wert der veränderten zweiten Identifikationsnummer entspricht. Beispielsweise befinden sich in dem Antwortgebersystem zwei RFID-Tags, auf die unabhängig voneinander zugegriffen werden kann. Beide RFID-Tags beinhalten nun zueinander gehörende ID, die fehlersicher zueinander passen, beispielsweise eine inverse ID's, eine über Checksumme gebildete ID, eine über einen Hash-Wert gebildete ID oder eine Anwendung durch Hamming-Codes oder auch durch ein einfaches XOR.

Bei einer erstmaligen Initialisierung des Antwortgebersystems wird der erste Wert in den ersten Transponder und der zweite

Werte in den zweiten Transponder zusätzlich zu den oder anstelle der Identifikationsnummern hinterlegt.

Bei einer Anmeldung des mobilen Bediengerätes über das Antwortgebersystem an den Wirkbereich wird mit einem Lesegerät der erste Wert des ersten Transponders und der zweite Wert des zweiten Transponders ausgelesen und in dem Lesegerät über eine zu der Funktion ausgelegten Gegenfunktion geprüft, ob der zweite Wert der Wert ist, welcher aus der Anwendung der Funktion auf die erste Identifikationsnummer entstanden ist. Ist dies der Fall, kann nun mit Sicherheit gesagt werden, dass die beiden Identifikationsnummern bzw. Werte zusammengehören und aus ein und demselben Antwortgebersystem stammen. Bei einem Anmeldebetrieb können die beiden Transponder bzw. RFID-Tags quasi gleichzeitig von dem Lesegerät ausgelesen werden und das Lesegerät kann die beiden gelesenen Werte gegeneinander prüfen und so den ausgelesenen Werten vertrauen. Eine weitere manuelle Eingabe des Bedieners ist nicht mehr erforderlich.

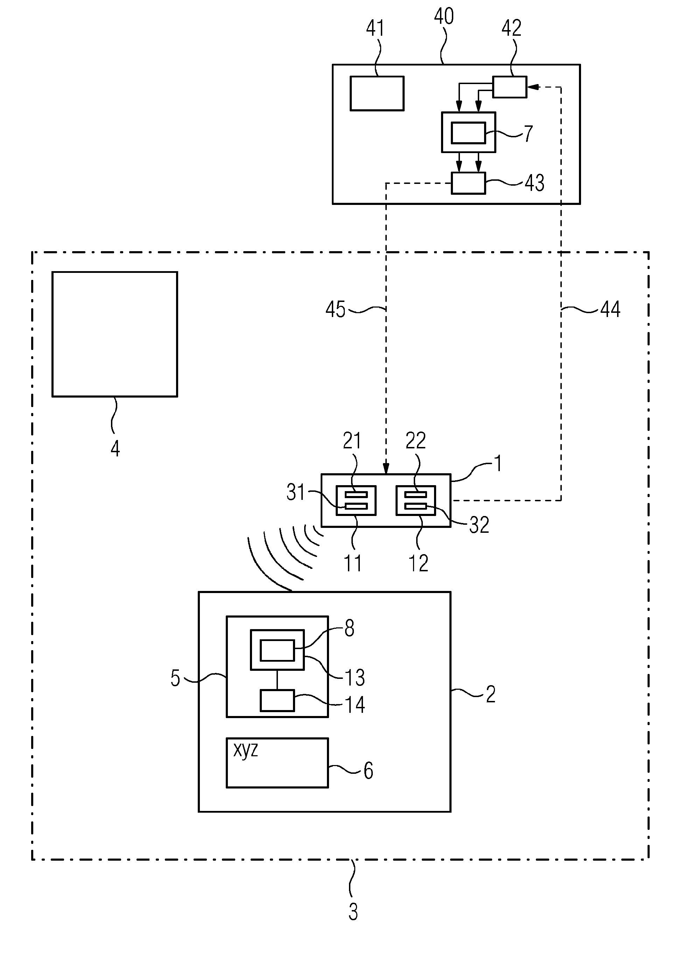

Die Figur zeigt ein Ausführungsbeispiel der vorliegenden Erfindung.

Gemäß der Figur ist ein Wirkbereich 3 um eine zu bedienende Maschine 4 aufgespannt. Ein Antwortgebersystem 1 ist dem Wirkbereich 3 zugeordnet. Das Antwortgebersystem 1 umfasst einen ersten Transponder 11 mit einer ersten Identifikationsnummer 21 und einen zweiten Transponder 12 mit einer zweiten Identifikationsnummer 22.

Das Antwortgebersystem 1, aufgebaut mit einer RFID-Technologie, kommuniziert über eine Funkverbindung mit einem mobilen Bediengerät 2. Für eine Anmeldung des mobilen Bediengerätes 2 an den Wirkbereich 3 der zu bedienenden Maschine 4, wird das mobile Bediengerät 2 an das Antwortgebersystem 1 angenähert und über ein das mobile Bediengerät 2 umfassendes Lesegerät 5 wird eine erste Identifikationsnummer 21 bzw. ein erster Wert 31 aus dem ersten Transponder 11 des Antwortgebersystems 1 ausgelesen. Um eine Sicherheit zu gewährleisten, wird über das Lesegerät 5 von einem zweiten Transponder 12 eine zweite Identifikationsnummer 22 bzw. ein zweiter Wert 32 ausgelesen.

In dem Lesegerät 5 wird geprüft, ob die erste und die zweite Identifikationsnummer 21,22 bzw. der erste und der zweite Wert 31,32 aus diesem Antwortgebersystem 1 stammen und bei einem positiven Prüfergebnis wird über ein Freischaltemittel 14, welches mit einer Prüfeinheit 13 kommuniziert, das mobile Bediengerät 2 zum Bedienen der Maschine 4 innerhalb des Wirkbereiches 3 freigeschaltet.

Ist das mobile Bediengerät 2 zum Bedienen der Maschine 4 für mehrere Wirkbereiche ausgelegt, so umfasst es eine Wirkbereichsliste 6 in derer die Identifikationsnummern und die Wirkbereiche abgespeichert sind (angedeutet durch XY2).

Um eine bestimmte Sicherheitsstufe zu erreichen, wurde nach dem Stand der Technik nach dem Auslesen einer Identifikationsnummer der Benutzer des mobilen Bediengerätes 2 aufgefordert, eine auf dem Antwortgebersystem 1 abgedruckte und ablesbare weitere Identifikationsnummer manuell über das mobile Bediengerät 2 einzugeben und somit eine Freischaltung zum Bedienen der Maschine 4 zu erreichen. Da nun bei einer Projektierung über ein Engineeringsystem 40 mit einem Projektierungswerkzeug 41 und einem Auslesemittel 42 und einem Schreibemittel 43, die erste und zweite Identifikationsnummer 21,22 aus dem Antwortgebersystem 1 vor einer Inbetriebnahme der Anlage über einen Lesevorgang 44 ausgelesen werden und über eine Funktion 7 die zweite Identifikationsnummer 22 derart verändert wird, dass später mit Sicherheit gesagt werden kann, dass die erste Identifikationsnummer 21 und die veränderte zweite Identifikationsnummer 22 zusammengehören, kann auf eine zusätzliche manuelle Eingabe einer abgelesenen Identifikationsnummer verzichtet werden.

Die über das Auslesemittel 42 ausgelesene erste Identifikationsnummer 21 und zweite Identifikationsnummer 22 werden in dem Engineeringsystem 40 derart verarbeitet, dass unter Zuhilfenahme der ersten Identifikationsnummer 21 auf die zweite Identifikationsnummer 22 eine Funktion 7 angewendet wird, welche die zweite Identifikationsnummer 22 derart verändert, dass ein Wertepaar von zwei Identifikationsnummern 22 vorliegt, wobei der erste Wert 31 der unveränderten ersten Identifikationsnummer 21 entspricht und der zweite Wert 32 der veränderten zweiten Identifikationsnummer 22 entspricht.

Der erste Wert 31 und der zweite Wert 32 werden über das Schreibemittel 43 in einem Schreibevorgang 45 in das Antwortgebersystem 1 bzw. in den ersten Transponder 11 und den zweiten Transponder 12 zurückgeschrieben. Dieser Vorgang stellt eine erstmalige Initialisierung des Antwortgebersystems 1 mit dem ersten Wert 31 und dem zweiten Wert 32 dar.

Bei einer Anmeldung des mobilen Bediengerätes 2 über das zuvor initialisierte Antwortgebersystem 1 an den Wirkbereich 3 wird nun mit dem Lesegerät 5 der erste Wert 31 des ersten Transponders 21 und der zweite Wert 32 des zweiten Transponders 22 ausgelesen und in dem Lesegerät 5 über eine zu der Funktion 7 des Engineeringsystems 40 ausgelegten Gegenfunktion 8 geprüft, ob der zweite Wert 31 der Wert ist, welcher aus der Anwendung der Funktion 7 auf die erste Identifikationsnummer 21 entstanden ist. Ist dies der Fall, kann nun mit Sicherheit gesagt, dass die beiden Identifikationsnummern 21,22 bzw. Werte 31,32 aus ein und denselben Antwortgebersystem 1 stammen.

## Patentansprüche

1. Antwortgebersystem (1) umfassend einen ersten Transponder (11) mit einer ersten Identifikationsnummer (21), **gekennzeichnet durch**
einen zweiten Transponder (12) mit einer zweiten Identifikationsnummer (22).

2. Verfahren zur Anmeldung eines mobilen Bediengeräts (2) an einen Wirkbereich (3) einer zu bedienenden Maschine (4), wobei das mobile Bediengerät (2) an ein Antwortgebersystem (1) angenähert wird, wobei das Antwortgebersystem (1) einem Wirkbereich (3) zugeordnet ist und über ein das mobile Bediengerät (2) umfassendes Lesegerät (5) eine erste Identifikationsnummer (21) aus einem ersten Transponder (11) des Antwortgebersystems (1) ausgelesen wird,
**dadurch gekennzeichnet, dass** über das Lesegerät von einem in dem Antwortgebersystems (1) angeordneten zweiten Transponder (12) eine zweite Identifikationsnummer (22) ausgelesen wird, wobei in dem Lesegerät (5) geprüft wird, ob die erste und die zweite Identifikationsnummer (21,22) aus dem Antwortgebersystem (1) stammen und bei einem positiven Prüfergebnis das Bediengerät (2) zum Bedienen der Maschine (4) in dem Wirkbereich (3) freigeschaltet wird.

3. Verfahren nach Anspruch 2, wobei eine Wirkbereichsliste (6) projektiert wird, in der die Identifikationsnummern (21,22) des Antwortgebersystem (1) dem Wirkbereich (3) zugeordnet sind und in dem mobilen Bediengerät (2) hinterlegt wird.

4. Verfahren nach Anspruch 3, wobei bei der Projektierung auf die zweite Identifikationsnummer (22) unter Zuhilfenahme der ersten Identifikationsnummer (21) eine Funktion angewendet wird, welche die zweite Identifikationsnummer (22) derart verändert, dass ein Wertepaar von zwei Identifikationsnummern (21,22) vorliegt, wobei der erste Wert (31) der unveränderten ersten Identifikationsnummer (21) entspricht und der zweite Wert (32) der veränderten zweiten Identifikationsnummer(22) entspricht.

5. Verfahren nach Anspruch 4, wobei bei einer erstmaligen Initialisierung des Antwortgebersystems (1) der erste Wert (31) in den ersten Transponder (21) und der zweite Wert (32) in den zweiten Transponder (22) zusätzlich zu den oder anstelle der Identifikationsnummern (21,22) hinterlegt werden.

6. Verfahren nach Anspruch 5, wobei bei der Anmeldung des mobilen Bediengeräts (2) über das Antwortgebersystem (1) an den Wirkbereich (3) mit dem Lesegerät (5) der erste Wert (31) des ersten Transponders (21) und der zweite Wert (32) des zweiten Transponders (22) ausgelesen wird und in dem Lesegerät (5) über eine zu der Funktion (7) ausgelegten Gegenfunktion (8) geprüft wird, ob der zweite Wert (32) der Wert ist, welcher aus der Anwendung der Funktion (7) auf die erste Identifikationsnummer (21) entstanden ist.
